# EUROPÄISCHE PATENTANMELDUNG

(11) **EP 1 088 646 A1**
(43) Veröffentlichungstag der Anmeldung: **04.04.2001**
(21) Anmeldenummer: 00120795.0
(22) Anmeldetag: 23.09.2000
(51) Int. Cl.: B29C 65/00, B29C 39/10

(54) **Rotor für einen Verdichter und Verfahren zu seiner Herstellung**

(30) Priorität: 29.09.1999 DE 19946623
(71) Anmelder: Dr.-Ing. K. Busch GmbH, 79689 Maulburg (DE)
(72) Erfinder: Basteck, Andreas, Dr., 79540 Lörrach (DE)
(74) Vertreter: Schmitt, Hans, Dipl.-Ing.

(57) **Zusammenfassung**

Ein Rotor (1) für einen Verdichter weist einen metallischen Kern (2) auf, der mit einem polymerkeramischen Werkstoff umspritzt wird, wobei Polymerkeramik und ein keramisches Füllmaterial so vermischt werden, daß nach dem Entformen des Rotors und einer gewissen Vernetzung sowie einer anschließenden Pyrolyse ein Rotor (1) hoher Maßhaltigkeit entsteht, der denselben oder etwa denselben Ausdehnungskoeffizienten wie der metallische Kern (2) hat.

## Beschreibung

Die Erfindung betrifft ein Verfahren zur Herstellung eines Rotors für einen Verdichter, wobei ein metallischer, für die Positionierung des Rotors dienender Kern, insbesondere eine Welle, Hohlwelle oder Buchse, mit Kunststoff umgossen oder umspritzt, und dazu in eine Spritzgießform eingelegt, dann mit Kunststoff umgossen und danach entformt und schließlich an dem metallischen Kern spanend bearbeitet wird,

Ein derartiges Verfahren ist aus DE 39 03 067 C2 für einen Rotor einer Rotationskolbenmaschine bekannt. Der Rotor wird dabei aus einem polymeren Werkstoff gebildet, der im späteren Betrieb nur eine begrenzte Erwärmung auf bis zu 150°C erlaubt. Außerdem haben in diesem Fall der Rotor und sein Kern unterschiedliche Ausdehnungskoeffizienten und außerdem unterscheiden sich auch die Ausdehnungskoeffizienten des Rotors und des Gehäuses voneinander, so daß zwischen dem Rotor und seinem Kern zusätzliche Spannungen oder gar Ablösungen auftreten können und der Rotor gegenüber dem Gehäuse größere Toleranzen einhalten muß, wenn kein Abrieb in Kauf genommen werden soll.

Es besteht deshalb die Aufgabe, ein Verfahren der eingangs genannten Art zu schaffen, durch welches ein Rotor hergestellt werden kann, der höhere Arbeitstemperaturen erlaubt und bei welchem zwischen dem Kern und dem eigentlichen Rotor keine oder keine nennenswerten Wärmespannungen auftreten können. Ferner soll eine hohe Genauigkeit des Rotors gegenüber seinem Gehäuse ohne die Gefahr eine wärmebedingten Berührung möglich sein.

Zur Lösung dieser Aufgabe ist das eingangs genannte Verfahren dadurch gekennzeichnet, daß der metallische Kern des Rotors mit einem polymerkeramischen Werkstoff, der aus einer Polymerkeramik und einem keramischen Füllmaterial zusammengesetzt wird, umspritzt wird, wobei das keramische Füllmaterial 10 Volumenprozent bis 80 Volumenprozent und die Polymerkeramik einen Mischungsanteil von 90 Volumenprozent bis 20 Volumenprozent hat, daß nach dem Entformen der Rotor bei einer Temperatur von etwa 200°C oder mehr mit eine Pyrolyse erfolgt und daß nach dieser Pyrolyse die Lagerflächen des metallischen Kerns spanend bearbeitet werden.

Dabei kann die Pyrolyse nach dem Entformen bei einer Temperatur bis etwa 800°C ablaufen.

Durch die Pyrolyse nach dem Entformen mit einer relativ hohen Temperatur kann das Gefüge des metallischen, insbesondere aus Stahl bestehenden Kernes geändert werden, so daß es wichtig ist, die spanende Bearbeitung an den Lagerflächen erst nach dieser Pyrolyse durchzuführen, um ein entsprechend präzises Teil und insbesondere präzise Lagerflächen zu erhalten. Die erwähnte Pyrolyse führt dazu, daß der Rotor selbst ein entsprechend genaues Maß hat und behält und durch die Werkstoffwahl in Kombination mit dem Temperaturverlauf in der Pyrolyse ergibt sich ein Rotor, dessen Ausdehnungskoeffizient zumindest weitgehend dem des metallischen Kernes, insbesondere eines Kernes aus Stahl, entspricht, so daß eine Nachbearbeitung des Rotors nicht erforderlich ist. Dieser hat vielmehr von vorneherein eine hohe Maßhaltigkeit bei einer vernachlässigbar kleinen Schwindung und kann gegenüber dem Gehäuse einer entsprechenden, diesen Rotor enthaltenden Maschine mit kleinen Toleranzen ausgebildet werden, da etwa derselbe Wärmeausdehnungskoeffizient am Rotor wie an dem metallischen Kern und auch an dem metallischen Gehäuse vorliegt.

Zweckmäßig ist es, wenn die Polymerkeramikmaterial, der keramische Füllstoff und gegebenenfalls weitere Materalien miteinander gemischt, dann in die den metallischen Kern bereits enthaltende Form eingespritzt und soweit erwärmt werden, daß eine Vernetzung auftritt, und wenn danach der Rotor entformt und zusätzlich pyrolisiert wird. Die Vernetzung ermöglicht die Formfindung.

Der metallische Kern kann mit einem vorzugsweise konischen Vorsprung versehen und damit in der Form zentriert werden und dieser konische Vorsprung kann nach dem Entformen spanend entfernt oder zu einer insbesondere zylindrischen Lagerstelle geformt werden. Somit hat der metallische Kern eine Doppelfunktion indem er zunächst die Zentrierung des metallischen Kernes in der Form für den Spritzvorgang und das Entformen erleichtert und anschließend nach der spanenden Bearbeitung seinen eigentlichen Zweck erfüllt.

Als metallischer Kern kann eine Welle gewählt und in die Form eingelegt werden und der oder die nach dem Entformen gegenüber dem Rotor überstehenden Bereiche dieser Welle können als Lagerstelle zu Zylindern abgedreht werden. Dabei kann die Welle in dem umspritzten Bereich eine unrunde Form haben, um eine gute Übertragung des Drehmomentes zu erlauben.

Als metallischer Kern kann aber auch eine Hülse oder Buchse in die Form eingelegt und nach dem Umspritzen und Entformen im Inneren gerieben oder feingebohrt werden. Steht dieser metallische Kern zunächst gegenüber dem Rotor stirnseitig über, kann ein solcher Überstand spanend entfernt werden, so daß die axiale Abmessung des Rotors und seines Kernes gleich sein können. Durch das Reiben oder Feinbohren des Inneren einer solchen Hülse oder Buchse ergibt sich die gewünschte präzise negative Zylinderform zur Positionierung des so hergestellten Rotors innerhalb eines Verdichtergehäuses.

Zum Entfernen des Rotors kann die Form entlang einer Teilungslinie geöffnet und der Rotor quer zur Trennebene entnommen oder ein schraubenförmiger Rotor in axialer Richtung herausgeschraubt oder ein Flügel aufweisender Rotor in axialer Richtung aus der Form herausgezogen werden. Somit ist auch das Entformen des Rotors und damit seine gesamte Herstellung einfach.

Die Erfindung betrifft auch einen Rotor für einen Verdichter, bestehend aus Kunststoff und einem metallischen Kern, insbesondere einer Welle, Hohlwelle oder Buchse, insbesondere hergestellt mittels des vorbeschriebenen Verfahrens und ist zur Lösung der Aufgabe einer möglichst einfachen Herstellung bei Vermeidung von Spannungen innerhalb des Rotors und der Gefahr eines Abriebes gegenüber dem Verdichtergehäuse dadurch gekennzeichnet, daß der Kunststoff des Rotors und sein metallischer Kern denselben oder im wesentlichen denselben Ausdehnungskoeffizienten haben, wobei der Kunststoff ein polymerkeramischer Werkstoff ist, der aus einer Polymerkeramik und einem keramischen Füllmaterial zusammengesetzt ist, wobei das keramische Füllmaterial 10 Volumenprozent bis 80 Volumenprozent und das Polymerkeramik einen Mischungsanteil von 90 Volumenprozent bis 20 Volumenprozent hat und nach dem Entformen bei einer Temperatur von etwa 200°C bis etwa 800°C pyrolisiert ist.

Nachstehend sind Ausführungsbeispiele der Erfindung anhand der Zeichnung näher beschrieben. Es zeigt in zum Teil schematisierter Darstellung:
- Fig.1: einen Längsschnitt einer Form, in welcher zur Herstellung eines Rotors für einen Verdichter ein metallischer Kern, in diesem Falle eine teilweise im Querschnitt unrunde Welle, mit einem polymerkeramischem Werkstoff umgossen oder umspritzt wird, wobei die Form das Negativ des Rotors bildet,
- Fig.2: eine der Fig.1 entsprechende Darstellung einer abgewandelten Ausführungsform, bei welcher ein Rotor mit einem als Hohlwelle, Buchse oder Hülse ausgebildeten metallischen Kern mit dem eigentlichen Rotor aus dem polymerkeramischen Werkstoff umspritzt wird, der wie beim Ausführungsbeispiel nach Fig.1 ein polymerkeramischer Werkstoff ist, sowie
- Fig.3: einen Querschnitt der Form und des darin gebildeten Rotors gemäß der Schnittlinie A-A in Fig.2.

In den nachfolgend beschriebenen unterschiedlichen Ausführungsbeispielen erhalten gleiche Teile auch bei abgewandelter Formgebung übereinstimmende Bezugszahlen.

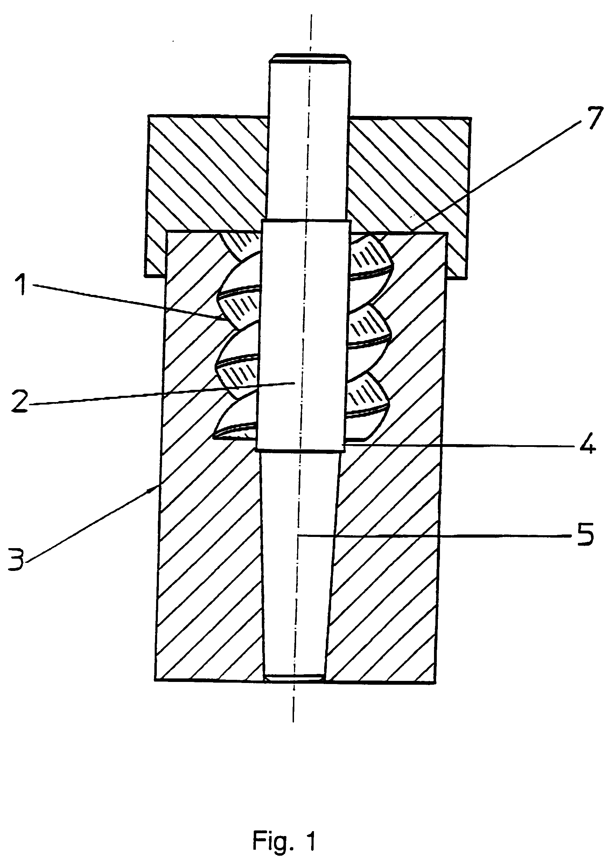

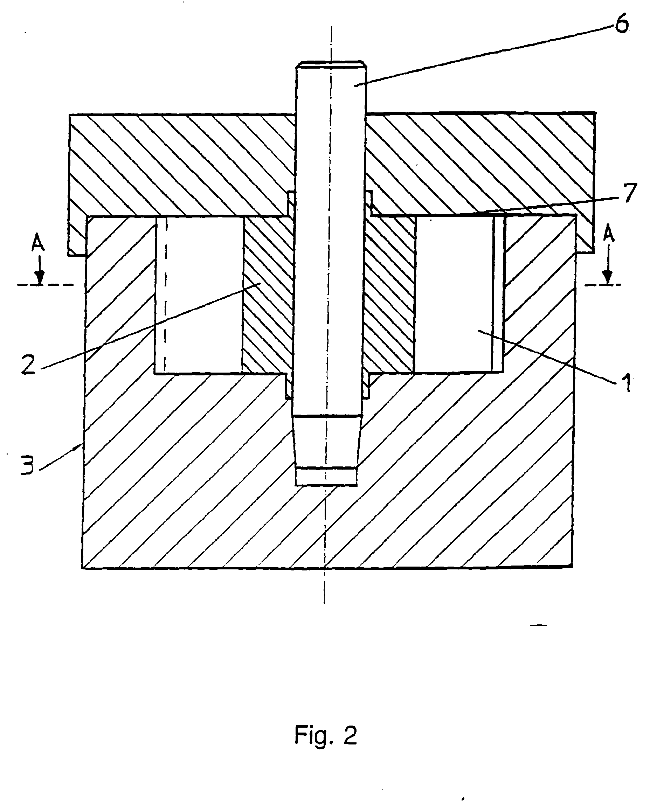

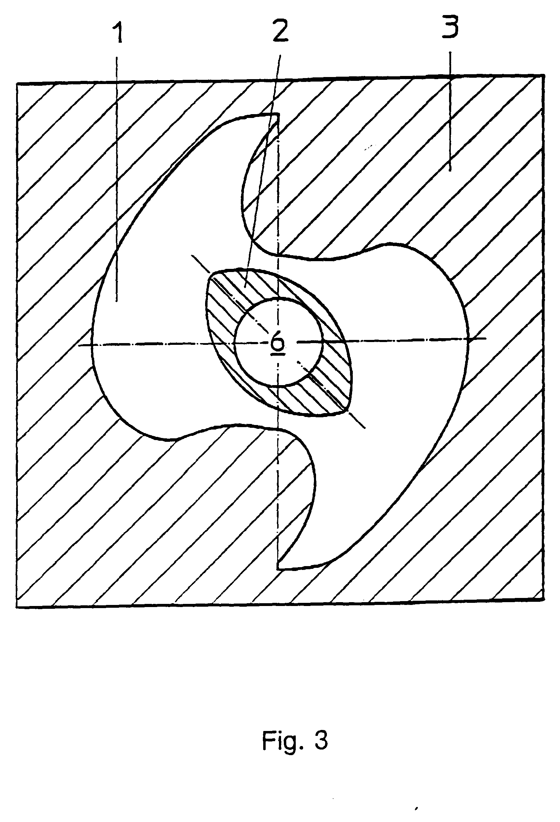

Ein Rotor 1, der gemäß Fig.1 ein schraubenförmiger Rotor, gemäß Fig.2 und 3 ein Flügel-Rotor sein kann, aber auch weitere Formen haben könnte, weist einen metallischen, für seine Positionierung dienenden Kern 2 auf, der im Ausführungsbeispiel nach Fig.1 eine Welle, im Ausführungsbeispiel nach Fig.2 eine Hohlwelle, Hülse oder Buchse ist.

Zu seiner Herstellung wird der Rotor 1 mit Polymerkeramik umgossen oder umspritzt, wofür der metallische Kern 2 jeweils in eine im ganzen mit 3 bezeichnete zweiteilige Form oder Gießform eingelegt, dann mit dem Gießwerkstoff umgossen und danach entformt wird. Anschließend kann dann an dem metallischen Kern 2 noch eine spanende Bearbeitung durchgeführt werden, um die Lagerstellen oder Lagerflächen des metallischen Kernes 2 in der endgültigen Form und Abmessung herzustellen.

Der metallische Kern 2 des Rotors 1 wird dabei mit einem polymerkeramischen Werkstoff, der aus einer Polymerkeramik und einem keramischen Füllmaterial zusammengesetzt wird, umspritzt, wobei das keramische Füllmaterial mehr oder weniger Anteile an der Gesamtmischung haben kann. Beispielsweise können 10 Volumenprozent bis 80 Volumenprozent dieses keramischen Füllmateriales mit 90 Volumenprozent bis 20 Volumenprozent der Polymerkeramik gemischt sein.

Nach dem Entformen des Rotors 1, also nach dem Entfernen aus der Gießform 3, erfolgt zunächst bei einer Temperatur von etwa 200°C oder mehr, insbesondere bei einer Temperatur von 200°C bis 800°C eine Pyrolyse des Rotors 1, die dem Rotor 1 die gewünschte Genauigkeit und insbesondere eine hohe Maßhaltigkeit bei vernachlässigbar kleiner Schwindung verleiht und dafür sorgt, daß der metallische Kern 2 und der Rotor 1 beziehungsweise sein polymerkeramischer Teil denselben oder nahezu denselben Wärmeausdehnungskoeffizienten haben.

Nach dieser Pyrolyse, die unter Umständen das Gefüge des metallischen, insbesondere aus Stahl bestehenden Kernes 2 verändern kann, erfolgt die spanende Bearbeitung an den Lagerflächen 4, die im Ausführungsbeispiel nach Fig.1, bei welchem der metallische Kern 2 von einer Welle gebildet ist, an den Stirnseiten des Rotors 1 etwas überstehen, während im Ausführungsbeispiel nach Fig.2 die Innenseite der Hohlwelle oder Hülse entsprechend spanend bearbeitet werden kann, beispielsweise durch Reiben oder Feinbohren.

In Fig.1 ist angedeutet, daß die überstehenden Bereiche des als Welle ausgebildeten metallischen Kernes 2 zu Zylindern abgedreht werden können, um entsprechende Lagerstellen zu bilden.

In den Figuren 1 und 2 ist jeweils noch angedeutet, daß der metallische Kern 2 eine unrunde Form hat, damit zwischen metallischem Kern 2 und dem umspritzten Teil des Rotors 1 das gewünschte Drehmoment über Formschluß übertragen werden kann.

Ferner erkennt man, daß der in Fig.1 als Welle ausgebildete Teil mit einem konischen Vorsprung 5 versehen ist, womit der metallische Kern 2 in diesem Ausführungsbeispiel in der Form 3 zentriert werden kann.

Auch im Ausführungsbeispiel nach Fig.2 ist ein solcher konischer Vorsprung 5 in diesem Falle an einem die Hohlwelle oder Hülse 2 durchsetzenden Stempel 6 vorgesehen. Im ersteren Falle kann der konische Vorsprung 5 spanend und im Ausführungsbeispiel nach Fig.2 und 3 durch Herausziehen des Stempels 6 entfernt werden.

Zum Entfernen des fertiggestellten Rotors 1 kann die Form 3 in beiden Fällen entlang einer Teilungslinie 7 geöffnet und der Rotor quer zur Trennebene entnommen, der schraubenförmige Rotor 1 gemäß Fig.1 beispielsweise in axialer Richtung aus der Restform herausgeschraubt werden, während der Flügelrotor 1 gemäß Fig.2 in axialer Richtung aus der geöffneten Form 3 herausgezogen werden kann.

Aufgrund der vernachlässigbaren Schwindung im Spritzvorgang mit anschließender Pyrolyse wird eine hohe Maßhaltigkeit des Rotors 1 erreicht, so daß Nacharbeiten an dem Rotor 1 selbst vermieden werden können und eine preiswerte Herstellung des Rotors 1 ermöglicht werden kann.

Das Entnehmen des Rotors 1 aus der Form 3 kann dabei nach dem noch in der Form 3 erfolgenden Vernetzen der Polymerkeramik mit dem keramischen Füllstoff erfolgen, um die gewünschte Festigkeit und Maßhaltigkeit zu erhalten und die nach dem Entformen erfolgende Pyrolyse vorzubereiten.

## Patentansprüche

1. Verfahren zur Herstellung eines Rotors (1) für einen Verdichter, wobei ein metallischer, für die Positionierung des Rotors dienender Kern (2), insbesondere eine Welle, Hohlwelle oder Buchse, mit Kunststoff umgossen oder umspritzt, und dazu in eine Spritzgießform eingelegt, dann mit Kunststoff umgossen und danach entformt und schließlich an dem metallischen Kern spanend bearbeitet wird, **dadurch gekennzeichnet**, daß der metallische Kern (2) des Rotors (1) mit einem polymerkeramischen Werkstoff, der aus einer Polymerkeramik und einem keramischen Füllmaterial zusammengesetzt wird, umspritzt wird, wobei das keramische Füllmaterial 10 Volumenprozent bis 80 Volumenprozent und die Polymerkeramik einen Mischungsanteil von 90 Volumenprozent bis 20 Volumenprozent hat, daß nach dem Entformen der Rotor (1) bei einer Temperatur von etwa 200°C oder mehr mit eine Pyrolyse erfolgt und daß nach dieser Pyrolyse die Lagerflächen (4) des metallischen Kernes (2) spanend bearbeitet werden.

2. Verfahren nach Anspruch 1, dadurch gekennzeichnet, daß der Rotor (1) nach dem Entformen bei einer Temperatur von 200°C bis etwa 800°C pyrolisiert wird.

3. Verfahren nach Anspruch 1 oder 2, dadurch gekennzeichnet, daß das Polymerkeramikmaterial, der keramische Füllstoff und gegebenenfalls weitere Materialien miteinander gemischt, dann in die den metallischen Kern (2) bereits enthaltende Form (3) eingespritzt und soweit erwärmt wird, daß eine Vernetzung auftritt, und daß danach der Rotor (1) entformt und zusätzlich pyrolisiert wird.

4. Verfahren nach einem der Ansprüche 1 bis 3, dadurch gekennzeichnet, daß der metallische Kern (2) mit einem vorzugsweise konischen Vorsprung (5) versehen und damit in der Form (3) zentriert wird, und daß dieser konische Vorsprung nach dem Entformen spanend entfernt oder zu einer insbesondere zylindrischen Lagerstelle geformt wird.

5. Verfahren nach einem der Ansprüche 1 bis 4, dadurch gekennzeichnet, daß als metallischer Kern (2) eine Welle gewählt und in die Form eingelegt wird, und daß der oder die nach dem Entformen gegenüber dem Rotor (1) überstehenden Bereiche dieser Welle als Lagerstellen (4) zu Zylindern abgedreht werden.

6. Verfahren nach einem der Ansprüche 1 bis 5, dadurch gekennzeichnet, daß als metallischer Kern (2) eine Hülse oder Buchse in die Form eingelegt und nach dem Umspritzen und Entformen im Inneren gerieben oder feingebohrt wird.

7. Verfahren nach einem der Ansprüche 1 bis 6, dadurch gekennzeichnet, daß zum Entformen des Rotors (1) die Form (3) entlang einer Teilungslinie (7) geöffnet und der Rotor (1) quer zur Trennebene entnommen oder ein schraubenförmiger Rotor (1) in axialer Richtung herausgeschraubt oder ein Flügel aufweisender Rotor (1) in axialer Richtung aus der Form (3) herausgezogen wird.

8. Rotor (1) für einen Verdichter, bestehend aus Kunststoff und einem darin eingebetteten metallischen Kern (2), insbesondere einer Welle, Hohlwelle oder Buchse, insbesondere hergestellt mittels des Verfahrens nach einem der Ansprüche 1 bis 7, dadurch gekennzeichnet, daß der Kunststoff des Rotors (1) und sein metallischer Kern (2) denselben oder im wesentlichen denselben Ausdehnungskoeffizienten haben, wobei der Kunststoff ein polymerkeramischer Werkstoff ist, der aus einer Polymerkeramik und einem keramischen Füllmaterial zusammengesetzt ist, wobei das keramische Füllmaterial 10 Volumenprozent bis 80 Volumenprozent und die Polymerkeramik einen Mischungsanteil von 90 Volumenprozent bis 20 Volumenprozent an diesem polymerkeramischen Werkstoff hat, und daß der Rotor (1) nach dem Entformen mit etwa 200°C bis etwa 800°C pyrolisiert ist.
